# EUROPEAN PATENT APPLICATION

(11) **EP 2 856 884 A1**
(43) Date of publication of application: **08.04.2015**
(21) Application number: 13797427.5
(22) Date of filing: 29.05.2013
(51) Int. Cl.: A23G 3/50, A21D 13/00

(54) **BAKED LOTUS ROOT CAKE, SOLID FOOD USING LOTUS ROOT POWDER, AND METHODS FOR MANUFACTURING SAME**

(30) Priority: 01.06.2012 JP 2012126386; 01.06.2012 JP 2012126390
(71) Applicant: Lotusweets Co., Ltd., Minato-ku, Tokyo 106-0032 (JP)
(72) Inventor: KAWAGUCHI Koji, Tokyo 106-0032 (JP); KAWAGUCHI Mine, Tokyo 106-0032 (JP)
(74) Representative: Grünecker Patent- und Rechtsanwälte PartG mbB
(86) International application number: PCT/JP2013/064938
(87) International publication number: WO 2013/180184

(57) **Abstract**

[Problem] To provide a baked lotus root cake and a solid food that comprises, as a main ingredient, a lotus root powder with little risk of allergy.

[Solution] A baked lotus root cake, characterized by being prepared by kneading a mixture composed mainly of a lotus root powder with heating to make a kneaded mixture and heating and pressuring the kneaded mixture to be baked into a thin sheet-shaped product. A solid food, characterized by being prepared by heating and baking a mixture composed mainly of a lotus root powder and not containing wheat flour and eggs.

## Description

### TECHNICAL FIELD

The present invention relates to a baked lotus root cake composed mainly of a lotus root powder and a method for manufacturing the same. The present invention also relates to a solid food that is free from wheat flour and eggs and composed mainly of a lotus root powder, and a method for manufacturing the same.

### BACKGROUND ART

A lotus root is an enlarged underground stem of a lotus, and one of crops that has been eaten in Japan since early time. The lotus root contains mainly a large amount of carbohydrates, a trace of proteins, and scarcely lipids, in addition to water, and is a low calorie food material having a calorie of about 65 kcal per 100 g of its edible part. Also the lotus root abundantly contains vitamin C, mucin, potassium, polyphenol, dietary fibers, and other ingredients, and is expected to have effects of, for example, preventing hypertension, arterial sclerosis, and common cold and exhibiting cosmetic effect, intestinal regulation, and anti-inflammatory/hemostatic effects. In recent studies, the lotus root has been described to also have effects on alleviation and amelioration of pollen allergy symptoms and enhancement of immune functions.

Conventionally in Japan, the lotus root has been utilized for various cooking, and foods or confectionaries using the lotus root have been known. For example, Japanese confectionaries like rice cakes (similar to bracken-starch dumplings and soft adzuki-bean jellies) are made by adding water and sugar to a lotus root powder (starch produced from the lotus root) and kneading the resulting mixture with heating.

In recent years, the number of persons having allergy symptoms against an allergic substance in food has increased in a broad range from babies to adults. In general, wheat flour and eggs are used for manufacturing baked cakes and the like. However, wheat flour and eggs (in addition, for example, shrimps, crabs, buckwheat, milk, and peanuts) have been designated as specified raw materials containing allergic substances. Foods containing these specified raw materials must indicate the raw materials contained therein on container packages or packages that can be easily seen (Article 1 Paragraph 2 and Appendix 4 of Cabinet Office Ordinance in relation to standards of displays based on the prescriptions in Article 19 Paragraph 1 of Food Sanitation Act (Cabinet Office Ordinance No. 45 as of August 31, 2011)).

Due to such a food allergy problem, consumers have required foods containing raw materials having a risk of an allergy as less as possible. As an example, Patent Literature 1 describes a method for manufacturing a snack confectionary composed mainly of soybeans. In the method described in Patent Literature 1, a coagulant for soybean curds is added to a soybean suspension for solidification, and a sheet-shaped soybean product is then baked to give a snack confectionary having a large number of fine pores and a light texture.

### CITATION LIST

Patent Literature 1: Japanese Patent No. 4625875

### DISCLOSURE OF INVENTION

### PROBLEM TO BE SOLVED BY THE INVENTION

As described above, the lotus root has attracted attention due to health trends in recent years, and is expected as not only a food material for cooking but also a raw material of foods including confectionaries because of its little risk of an allergy compared with wheat flour and eggs.

The above-described rice cake-like Japanese confectionary is a food composed mainly of lotus root powder or a confectionary composed mainly of lotus root powder. This confectionary is a fresh sweet and disadvantageously spoils rapidly. In addition, although the confectionary has a unique soft and sticky texture, this texture is difficult to be maintained. Thus, the confectionary is unsuitable for mass production.

On the other hand, a baked solid food or a baked cake can be stored for a long period of time, but neither a solid food nor a baked cake composed mainly of the lotus root powder has been available as far as the applicant knows. In the method for manufacturing the snack confectionary described in Patent Literature 1, the baked snack including soybeans as the major raw material is manufactured by solidifying a soybean protein with a coagulant (bittern). It is therefore difficult to apply this method to the solid food or the baked cake composed mainly of the lotus root powder.

An aspect of the present invention has been made in the light of the above problem, and it is an object of the invention to provide a baked lotus root cake composed mainly of a lotus root powder with little risk of an allergy. It is another object of the invention to provide a baked cake that suits consumers' taste and is excellent in texture.

Another aspect of the present invention has been made in the light of the above problem, and it is an object of the invention to provide a solid food composed mainly of a lotus root powder with little risk of allergy. It is another object of the invention to provide a solid food that suits consumers' taste and is excellent in texture.

### MEANS FOR SOLVING PROBLEM

In order to solve the aforementioned problem, the baked lotus root cake according to an embodiment of the present invention is a baked lotus root cake, being prepared by kneading a mixture composed mainly of a lotus root powder with heating to make a kneaded mixture and heating and pressuring the kneaded mixture to be baked into a thin sheet-shaped product.

In the baked lotus root cake, the kneaded mixture is preferably a gelatinized starch component of the lotus root powder. The mixture is preferably of a main raw material containing the lotus root powder and an auxiliary raw material containing at least a liquid. The mixture is preferably includes 20 g to 40 g of the lotus root powder, 10 g to 30 g of a sweetener, and 100 cc of the liquid. The liquid preferably contains milk. The milk preferably contains butter.

The baked cake may be seasoned with a food material for seasoning. The baked cake preferably has a pattern having an uneven thickness and a continuous thick portion on a surface of the thin sheet-shaped baked cake. The baked lotus root cake preferably has a pattern comprising protrusions or grooves having a tilt angle of 7 to 15 degrees on at least a part of the surface.

The baked lotus root cake according to another embodiment of the present invention may be a cake composed of two of the baked lotus root cakes stacked with a bean paste therebetween.

The solid food according to an embodiment of the present invention is a solid food, being prepared by heating and baking a mixture composed mainly of a lotus root powder and not containing wheat flour and eggs. The solid food according to an embodiment of the present invention is a solid food, being prepared by kneading a mixture composed mainly of a lotus root powder and not containing wheat flour and eggs with heating to make a kneaded mixture and heating and pressurizing the kneaded mixture into a baked product.

In any of the solid foods, the mixture is preferably of a main raw material containing the lotus root powder and an auxiliary raw material containing at least the liquid. The mixture is preferably composed of 20 g to 40 g of the lotus root powder, 10 g to 30 g of the sweetener, and 100 cc of the liquid. The liquid preferably contains milk. The milk preferably contains butter.

The solid food may be seasoned with a food material for seasoning. The solid food preferably has a pattern having an uneven thickness and a continuous thick portion on a surface of the thin sheet-shaped solid food. The solid food preferably has a pattern comprising protrusions or grooves having a tilt angle of 7 to 15 degrees on at least a part of the surface.

The solid food according to another embodiment of the present invention is a solid food composed of two of the baked thin sheet-shaped solid foods stacked with a bean paste therebetween.

The method for manufacturing the baked lotus root cake according to an embodiment of the present invention comprises mixing a main raw material containing a lotus root powder and an auxiliary raw material containing at least a liquid; kneading the mixture with heating to gelatinize the starch component of the lotus root powder; and heating and pressurizing the kneaded mixture to bake it into a thin sheet-shaped product.

In the method for manufacturing the baked lotus root cake, the amount of the lotus root powder contained in the raw material is preferably 50% by weight or more based on the amount of the raw material or 25% by weight or more based on the dry weight of the kneaded mixture. It is also preferable to mix 20 g to 40 g of the lotus root powder and 10 g to 30 g of the sweetener with 100 cc of the liquid. The baking into the thin sheet-shaped product is preferably performed at 130°C to 175°C, more preferably at 150°C to 165°C.

The liquid preferably contains milk. The milk preferably contains butter. A taste and a smell of the food material for seasoning may be transferred to the liquid while the liquid being warmed. Alternatively, the food material for seasoning may be kneaded with the mixture. The thin sheet-shaped product may be molded within 10 seconds after being baked with heat and pressure.

The method for manufacturing the solid food according to an embodiment of the present invention comprises mixing a raw material containing a lotus root powder and not containing wheat flour and eggs and an auxiliary raw material containing at least a liquid; and baking the mixture by applying heat thereto. The method for manufacturing the solid food according to another embodiment of the present invention comprises mixing a raw material containing a lotus root powder and not containing wheat flour and eggs and an auxiliary raw material containing at least a liquid, kneading the mixture with heating, and baking the kneaded mixture by applying heat and pressure thereto.

In any of the methods for manufacturing the solid food, the amount of the lotus root powder contained in the raw material is preferably 50% by weight or more based on the amount of the raw material or 25% by weight or more based on the dry weight of the kneaded mixture. It is also preferable to mix 20 g to 40 g of the lotus root powder and 10 g to 30 g of the sweetener with 100 cc of the liquid. The baking into the thin sheet-shaped product is preferably performed at 130°C to 175°C, more preferably at 150°C to 165°C.

The liquid preferably contains milk. The milk preferably contains butter. A taste and a smell of the food material for seasoning may be transferred to the liquid while the liquid being warmed. Alternatively, the food material for the seasoning may be kneaded with the mixture. The thin sheet-shaped product may be die-cut within 10 seconds after baking with heat and pressure.

### EFFECT OF THE INVENTION

An aspect of the present invention can provide a new baked cake including a lotus root having a high nutritional quality and little risk of an allergy and also can provide a baked cake having an unprecedented and new food texture. Other effects will be described in BEST MODES FOR CARRYING OUT THE INVENTION.

Another aspect of the present invention can provide a new solid food that is composed mainly of a lotus root powder having a high nutritional quality and does not contain major allergic substances, wheat flour and eggs, and also can provide a solid food having an unprecedented and new texture.

### BRIEF DESCRIPTION OF DRAWINGS

FIGS. 1A and 1B are views showing one example of a baked lotus root cake (with a pattern) in an embodiment of the present invention;
FIG. 2 is a view showing one example of a metal plate used in a step of baking; and
FIG. 3 is a view showing one example of a baked lotus root cake (cigar-shaped) in an embodiment of the present invention.

### BEST MODES FOR CARRYING OUT THE INVENTION

### (Solid food)

As a result of trials and errors, the present inventors obtained a solid food having little risk of an allergy by applying heat to a mixture not containing at least wheat flour and eggs and composed mainly of a lotus root powder prepared by dissolving a main raw material containing the lotus root powder and an auxiliary raw material in an appropriate amount of, for example, water or to a kneaded mixture prepared by kneading the mixture with heating.

First, it was found that dough with a low viscosity can be made by mixing a lotus root powder with a liquid and that the lotus root powder is solidified by baking the dough to give an edible solid food. Such a solid food had a hard and rough texture and left a flour-like feeling on the tongue depending on an extent of baking. This solid food, however, can be combined with another confectionary (such as ice cream or bean paste) or another cooking (such as soup). Such a solid food can be made into an easy-to-eat food by adding a liquid (such as consommé soup, Japanese stock, or corn potage) conditioned with a salt, umami, and other taste as an auxiliary raw material. Thus, such a solid food is available as a cereal food, a nutrition conditioned food, an emergency food, or a preservative food. A solid food having a moist texture with half-fresh feeling in a central part can also be made by baking the dough at low temperature.

Further, as a result of trials and errors, the present inventors found that a solid food having a moderate texture can be manufactured by kneading a mixture composed mainly of a lotus root powder with heating and baking the kneaded mixture into a thin sheet-shaped product by applying heat and pressure.

The solid food of the present invention can be prepared by a method comprising a step (blending step) of blending a main raw material containing a lotus root powder with an auxiliary raw material containing at least a liquid to make a mixture, a step (kneading step) of kneading the mixture with optionally heating to make a kneaded mixture containing gelatinized starch of the lotus root powder, and a step (baking step) of baking an appropriate amount of the mixture or the kneaded mixture under pressure.

The solid food of the present invention may have a thin sheet-shaped shape, a block shape, a rod shape, a dish shape, a cup shape, or a bowl shape. The solid food composed mainly of the lotus root powder of the present invention is not limited to these shapes, and can be made into various shapes for the purpose of using as a cereal food, a nutrition conditioned food, an emergency food, or a preservative food. Hereinafter, embodiments of the solid food molded into a thin sheet-shaped shape to be eaten as a baked lotus root cake will be primarily explained.

### (Baked lotus root cake)

When a lotus root powder is mixed with a liquid, only dough with a low viscosity is merely made. When sugar is added to the dough and the dough is baked, the lotus root powder is merely baked and solidified. Depending on the extent of baking, the flour-like feeling is left on the tongue with the hard and rough texture, and sweetness of the sugar is scarcely felt. Thus, the mixture is unsuitable for making a cake. A solid food having a moist texture with half-fresh feeling in the central part can also be made by baking the dough at low temperature, but the central part has a half-baked taste although it is soft. Thus, the mixture is similarly unsuitable for making a cake.

As a result of trials and errors, the present inventors found as another aspect of the present invention that a baked cake having a moderate texture can be manufactured by kneading a mixture composed mainly of a lotus root powder with heating, and baking the kneaded mixture into a thin sheet-shaped product by applying heat and pressure thereto.

The baked lotus root cake of the present invention can be prepared by a method comprising a step (blending step) of blending a main raw material containing a lotus root powder with an auxiliary raw material containing at least a liquid to make a mixture, a step (kneading step) of kneading the mixture with heating to make a kneaded mixture containing gelatinized starch of the lotus root powder, and a step (baking step) of baking an appropriate amount of the kneaded mixture under pressure.

In the solid food or the baked lotus root cake of the present invention, "kneading the mixture with heating" refers to production of a kneaded mixture with a high viscosity by gelatinizing (pregelatinizing) a starch component of the lotus root powder with incorporating air. In the solid food or the baked lotus root cake of the present invention, "composed mainly of a lotus root powder" refers to that the amount of the lotus root powder is 50% by weight or more based on the amount of the main raw material (lotus root powder and other optional grain powders) or is 25% by weight or more based on the dry weight of a mixture (dough) of a main raw material (lotus root powder and optional other grain powders) and an auxiliary raw material (such as a sweetener, liquid, and food material for seasoning) from which water has removed.

### (Raw materials of solid food)

The solid food of the present invention that is composed mainly of a lotus root powder and is free from wheat flour and eggs is produced by using a main raw material (lotus root powder and optional other grain powders) and an auxiliary raw material (such as a sweetener, liquid, and food material for seasoning). In the present invention, the lotus root powder is used as the main raw material, and wheat flour and eggs, which have a high risk of an allergy, are not contained in the main raw material and the auxiliary raw material. In order to further reduce the risk of an allergy, the liquid for dissolving the lotus root powder is preferably water. In this case, the raw material of the baked cake of the present invention is free from any of 7 items, i.e., "shrimps, crabs, wheat flour, buckwheat, eggs, milk and peanuts" designated as "specified raw materials" containing allergic substances. Thus, the solid food (baked cake) gives to the whole consumers a very low risk of causing an allergy problem. In this regard, however, since the allergic substance to which a consumer responds is different among consumers, the solid food can optionally contain some items. For example, not a small number of consumers allergically responding to wheat flour and eggs does not allergically respond to milk. Accordingly, if necessary, a liquid containing milk may be used in place of water to increase the flavor and the umami of the baked cake.

In the solid food of the present invention, it is preferable to use a lotus root powder alone as the main raw material. The mixture does not contain at least wheat flour and eggs, which are allergic substances. In this regard, however, the main raw material is not limited thereto. As long as the lotus root powder occupies a half or more of the main raw material or 25% by weight or more of the dry weight of the mixture, another grain powder (but except wheat flour) having little risk of allergy may be optionally contained in the mixture. Examples of the grain powder other than the lotus root powder include powders of grains, such as powders of gramineous grains excluding wheat flour (e.g., rice powder, barley powder, rye powder, corn powder, teff powder, and millet powder), powders of beans (e.g., soybean powder, chickpea powder, and pea powder), and powders of pseudo-grains (e.g., buckwheat powder and amaranth powder); and powders of potatoes and root vegetables (e.g., starch powder, powdered arrowroot, tapioca powder, and potato powder); and powders of nuts (e.g., chestnut powder and acorn powder). In particular, the grain powders (e.g., rice powder and soybean powder) having little risk of an allergy are preferred.

### (Raw materials of baked lotus root cake)

In the baked lotus root cake of the present invention, the main raw material is preferably composed of a lotus root powder alone, and wheat flour and eggs, which are allergic substances, are preferably not contained in the mixture. In this regard, however, the main raw material is not limited thereto. As long as the lotus root powder occupies a half or more of the main raw material or 25% by weight or more of the dry weight of the mixture, another grain powder may be contained. Examples of the grain powder other than the lotus root powder include powders of grains, such as powders of gramineous grains (e.g., wheat flour, rice powder, barley powder, rye powder, corn powder, teff powder, and millet powder), powders of beans (e.g., soybean powder, chickpea powder, and pea powder), and powders of pseudo-grains (e.g., buckwheat powder and amaranth powder); powders of potatoes and root vegetables (e.g., starch powder, powdered arrowroot, tapioca powder, and potato powder); and powders of nuts (chestnut powder and acorn powder). In particular, the grain powders (e.g., rice powder, and soybean powder) having little risk of an allergy are preferred. In the baked lotus root powder of the present invention, when the texture as the baked cake rather than allergy measure is emphasized or when the easier baking step is preferred, wheat flour, eggs, or another allergic substance may be added within a required range to the mixture.

In the solid food or the baked lotus root cake, a mixing ratio of the main raw material and the auxiliary raw material is necessary to be appropriately determined depending on a quality and a condition of the lotus root powder that is the main ingredient, types of the auxiliary raw material, a flavor required for a food product, weather conditions (temperature and humidity) upon manufacturing the food product, and other factors. As a rough standard for appropriate amounts, a sum of the dry weights of the main raw material and the auxiliary raw material is within a range of 30 g to 90 g, more preferably 45 g to 70 g, in 100 cc of the liquid.

In addition, a weight ratio of the dry weights of the main raw material and the auxiliary raw material is controlled such that the amount of the main raw material is 25% by weight or more and more preferably 40% by weight or more. When a sweeter fruit is used as a food material for seasoning, the amount of a sweetener may be decreased. When an ingredient abundantly containing water is used, it is preferable to control the amount of the liquid. For example, when a lotus root powder is used as the main raw material and a sweetener and a liquid containing milk are used as the auxiliary raw material, 20 g to 40 g of the main raw material and 10 g to 30 g of the sweetener are added to 100 cc of the liquid containing milk. Here, the content percentage of the lotus root powder varies depending on the composition of the liquid containing milk. In the case of milk (specific gravity: 1.03, water content: 87.4% by weight), the dry weight of the milk is about 13 g (103-103x0.874), and the content percentage of the lotus root powder is about 46% by weight (20/(20+10+13) to about 48% by weight (40/(40+30+13). The auxiliary raw material is composed of raw materials other than grain powders including the lotus root powder, and is primarily composed of, for example, a sweetener, a liquid, and a food material for seasoning.

The "liquid" supplies water to be absorbed when the starch component of the main raw material is gelatinized (pregelatinized). The "liquid" is typically water or a liquid containing milk and may be soymilk derived from soybeans, fruit juice, vegetable juice, cooking water of fruits or vegetables, or a conditioned solution (consommé soup, Japanese stock) conditioned with a salt and umami. A conditioned solution, such as corn potage, (which also serves as a food material for seasoning), can also be used. The liquid preferably contains milk for providing flavor and umami, but the liquid containing no milk (e.g., water or soymilk) may be used in consideration of consumers having an allergy against milk.

In the present invention, the "milk" refers to not only so-called milk (raw milk, cow milk, special cow milk, raw goat milk, sterilized goat milk, raw sheep milk, quality-governing milk, low fat milk, no fat milk, and processed milk) stated in Article 2 of the Ministerial Ordinance Concerning Compositional Standards, etc. for Milk and Milk Products (Ministerial Ordinance from the Ministry of Health and Welfare as of December 27 in 1951) but also milk products (creams, butters, butter oils, cheeses, concentrated whey, ice creams, concentrated milk, defatted concentrated milk, sugarless condensed milk, sugarless defatted condensed milk, sweetened condensed milk, sweetened defatted condensed milk, whole powdered milk, defatted powdered milk, cream powder, whey powder, protein concentrated whey powder, butter milk powder, sweetened powdered milk, conditioned powdered milk, fermented milk, yogurt, lactobacillus beverages, and milk beverages).

The liquid containing milk may be the milk itself (e.g., cow milk) if the milk is a liquid or may be diluted milk in a liquid state with water or a conditioned solution. Alternatively, the liquid may be prepared by adding an appropriate amount of water or a conditioned solution to whole powdered milk, defatted concentrated milk, defatted powdered milk, or other processed milk. Whole powdered milk, defatted concentrated milk, and defatted powdered milk are preferred because they can be easily stored as raw materials and can be precisely weighed.

The "sweetener" may be a natural sweetener or a synthesized artificial sweetener. Preferred are natural sweeteners, and examples thereof include sugars (e.g., brown sugar, maple sugar, palm sugar, Wasanbon (refined sugar made from sugarcane in Japan), Akafuta, Kifuta, caster sugar, medium soft sugar, dark sweet liquid produced after the third heating in a thermal sugar-refining, coarse crystal white soft sugar, coarse crystal medium soft sugar, and granulated sugar), honey, maple syrup, glutinous starch syrup, molasses, glucose, fructose, maltose, sucrose, glucose fructose liquid sugar, and oligosaccharide. The sweetener can be appropriately selected depending on the desired flavor and the taste. When a food material for seasoning is used, in order not to impair its flavor, caster sugar is preferably used. A salt in an appropriate amount may also be used. When milk or a food material for seasoning itself contains a sugar content (e.g., when sweetened defatted condensed milk or fruit juice is used), it is preferable to control the amount of the sweetener depending on the amount of the sugar content.

The food material for seasoning may be added to a mixture before, during, or after kneading depending on the nature of the food material.

Since the main ingredient, lotus root powder itself, does not have a remarkable taste, food materials for seasoning (including flavoring materials) may be used in order to impart various taste, perfume, flavor, color and the like to the baked lotus root cake. As a result, the baked lotus root cake can have various taste, perfume, flavor, color and the like. The food material for seasoning is not particularly limited, and examples thereof include ground green tea, roasted green tea, tea, Earl Grey, roasted soybean flour, sesame, chocolate, cocoa, caramel, vanilla, strawberry, cassis, passion fruits, raspberry, brandy, and liqueur. Such use allows seasoning (including flavoring, spicing, and coloring) of the baked cake, depending on the food material. In particular, for example, strawberry, cassis, passion fruits, or raspberry can give an acidic taste to the baked cake.

Alternatively, a conditioned solution (e.g., consommé soup, Japanese stock, or corn potage) conditioned with salt and umami can be used as the food material for seasoning. In such a case, the amount of either the milk or the sweetener is reduced, or the milk and the sweetener are not used.

The food material for seasoning may be blended as a part of the mixture in the blending step or be kneaded as a part of the kneaded mixture in the kneading step, depending on its nature. Flavors from some of the food materials for seasoning (e.g., vanilla beans or Earl Grey) may be transferred to the liquid containing milk before the blending step.

Some food materials for seasoning have a risk of losing their flavor by heating upon the kneading step. In this case, it is preferable to lower the heating temperature and/or to shorten heating time in the kneading step. Some food materials for seasoning (mainly powdery materials, e.g., ground green tea, roasted soybean flour, and cocoa powder) may be kneaded with the kneaded mixture after the kneading step. In particular, a food material, the flavor of which is easily volatilized by heat, is preferably added to the kneaded mixture after cooling for a while.

Use of a lyophilized and pulverized fruit (e.g., strawberry) as a food material for seasoning to be kneaded into a kneaded mixture allows the flavor and the texture of the food material itself to be maintained. When a material abundantly containing water is used as the food material for seasoning, it is preferable to previously adjust the water content of the liquid containing milk to an appropriate amount. Since use of a jelly derived from a fruit may influence the gelatinization of the starch, it is preferable to add the jelly at least after completing the gelatinization. Further, a fondant or a candy coating may be applied onto a baked cake after molding the baked cake.

### (Blending step)

In the blending step, the raw materials are mixed to give an approximately uniform mixture. In this step, the mixing is sufficiently performed to incorporate air into the mixture, but it varies depending on the type of milk used. The blending step may be carried out simultaneously with the kneading step. That is, the raw materials may be added to the mixture little by little while the mixture being kneaded with heating.

In an embodiment of the present invention, raw materials in respective appropriate amounts may be blended to make a mixture, and the mixture in an appropriate amount may be baked by being applied with appropriate heat. Alternatively, the mixture may be kneaded with heating to make a kneaded mixture containing gelatinized starch of the lotus root powder, and the kneaded mixture in an appropriate amount may be then baked by being applied with appropriate heat and pressure. The kneading step will now be explained.

### (Kneading step)

In the kneading step, the mixture is strongly stirred while being directly or indirectly heated (for example, heating the container containing the mixture or adding a hot liquid to the mixture) to knead the mixture and to incorporate air into the mixture. The starch of lotus root powder in the mixture absorbs water in the mixture to swell by being strongly stirred while being heated, resulting in an increase in viscosity and incorporation of air. That is, the kneaded mixture containing gelatinized (pregelatinized) starch is formed.

In the kneading step, the mixture may be kneaded while being heated at high heat (e.g., about 90°C to 110°C as measured on an inner surface of the container using a contact-type thermometer) for a relatively short period of time (e.g., 3 to 7 minutes), which varies depending on an amount of a mixture placed in a container for heating and stirring. Alternatively, the mixture may be kneaded with heating at medium heat (e.g., about 80°C to 100°C as measured on the inner surface of the container using the contact-type thermometer) for a relatively long period of time (e.g., 5 to 15 minutes). The mixture may be kneaded at high heat for an appropriate period of time to the extent that the mixture does not get burned, and after reaching an appropriate viscosity, the mixture may be kneaded at medium heat for about 5 minutes. In this regard, however, the heating temperature and period of time vary depending on various factors (e.g., materials, the size and the shape of the container, and the amount of the mixture). Thus, the conditions are not limited to the above examples as long as the starch component in the lotus root powder is gelatinized. In the kneaded mixture, sufficient amounts of air and water are contained in the dough having a high viscosity. Consequently, the air and the water inside the dough can escape to form fine pores in the baking step.

This kneaded mixture itself has a soft and sticky texture and sweetness even after being cooled and can also be eaten directly. The kneaded mixture can also be utilized as a paste to be sandwiched (enclosed paste) between two baked lotus root cakes. The kneaded mixture can also be utilized as the paste enclosed with bean-jam-filled wafers, wafers, or pancakes in addition to the baked lotus root cakes. Bean-jam-filled wafers, wafers, and pancakes may also be made from the baked lotus root cakes.

When a mixture is not subjected to the kneading step, the mixture does not sufficiently incorporate air, and the starch component is not gelatinized by heating. Consequently, the mixture becomes a smooth liquid with a low viscosity. On the other hand, when a mixture is subjected to the kneading step, the mixture abundantly incorporates air and has a sufficiently high viscosity.

### (Baking step)

In the baking step, a mixture or kneaded mixture is divided into appropriate pieces depending on the size and the thickness of a baked cake to be formed, and the mixture or kneaded mixture divided into appropriate pieces is baked by being pressed between two metal plates. A slight space (about 2 to 7 mm) is provided between the two metal plates, and the mixture or the kneaded mixture is extended into the space and baked into a thin sheet-shaped baked lotus root cake having a thickness of about 2 to 7 mm. Before inserting the mixture or the kneaded mixture in an appropriate amount between the metal plates, oil in a small amount may previously be sprayed or applied onto the metal plates such that the baked lotus root cake is easily released from the metal plates.

The conditions for baking the mixture or the kneaded mixture (heating temperature, heating period of time, and pressure) may be appropriately controlled depending on the amount of the mixture or the kneaded mixture and the environment (ambient temperature and humidity and the like). The heating is preferably performed, for example, at 130°C to 175°C , more preferably 130°C to 170°C, as measured on the metal plate just before starting baking using the contact-type thermometer for about 1 to 3 minutes. The heating may be performed at 135°C to 160°C for 2 minutes to 2 minutes 40 seconds, which vary depending on the flavor used. The pressure may be of such magnitude that the mixture or the kneaded mixture can be pressed and extended into a thin sheet-shape and, in some cases, may be the weight of the metal plate itself serving as a die. The metal plate may be pressed using a driving source.

Various textures, from a texture like a rice cracker or a hard cookie to a moist texture having a half-raw feeling, can be obtained by appropriately setting the heating temperature and the heating period of time for baking the mixture. A cake baked without being subjected to the kneading step can be eaten directly, but when a hard texture is not favorable as a baked cake, it can be utilized as a solid food (e.g., an easily portable brock-type food for between-meal eating), an auxiliary raw material for other confectionaries and food products (e.g., coats of bean-jam-filled wafers, cones or cups for ice creams, edible dishes for cooking, and wafers that sandwich a creamy content).

If the heating temperature, the heating period of time, and the water content are inappropriate, the baked cake may become too hard and may not be readily released from the die. Alternatively, a central part of the cake may not be cooked, and the cake may not be baked and solidified to the extent that its shape can be kept, or the cake may be fragile and broken.

Various textures, from a crisp and light texture to a soft and sticky texture, can be obtained by appropriately setting the heating temperature, the heating period of time, and the pressure for baking the kneaded mixture. When the heating temperature is relatively high or the heating period of time is relatively long, dough with a high viscosity is hardened to give a slightly hard baked cake having a crunchy texture.

On the other hand, when the heating temperature is relatively low or the heating period of time is relatively short, a baked cake having a slightly soft and sticky texture can be obtained. In moderate conditions, due to the air kneaded in the dough, fine pores are formed in thin baked dough to give a baked cake having a complex texture of a crisp texture and a soft and light texture like melting in the mouth.

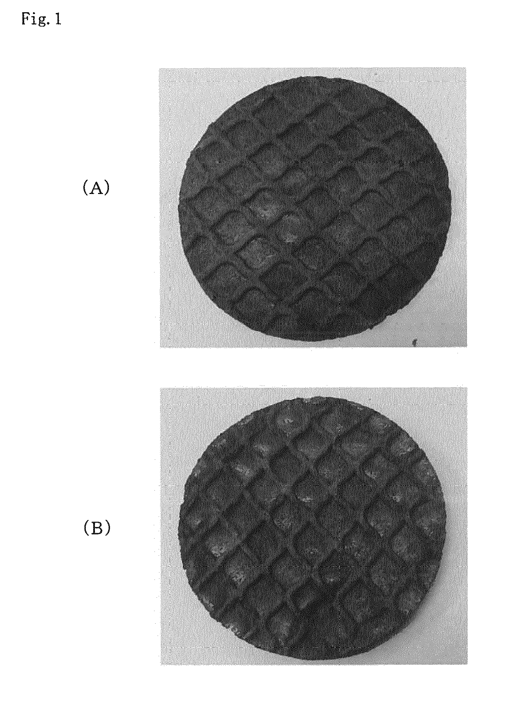

By way of example, a baked cake having a complex texture of a crisp texture and a soft and light texture like melting in the mouth can be prepared by baking a kneaded mixture not containing a food material for seasoning in an appropriate amount (giving a thickness after pressing of 2 to 7 mm) started at 160°C for about 2 minutes (e.g., see FIG. 1).

It is assumed that the water in the kneaded mixture is evaporated together with escaping air contained in the kneaded mixture by applying heat and pressure to the kneaded mixture having a high viscosity and containing the gelatinized (pregelatinized) starch component, and thereby a structure (body) having a steric network composed mainly of the lotus root powder is formed. It is also assumed that the fine pores are formed in such a body by the evaporation of the water and the escape of the air to give the crisp and light texture.

It is also assumed that when the heating temperature is low or when the heating period of time is short, the water in the kneaded mixture is not removed completely to give a soft and sticky texture. Further, the pressure applied to the kneaded mixture allows the kneaded mixture with a high viscosity (typically a solid like a dumpling) to become a thin sheet-shaped product. Since such a thin sheet-shaped product is baked, the kneaded mixture can be evenly baked in a short period of time. This might contribute to the formation of the unique texture. The heat can be evenly applied to the thin sheet-shaped product by applying the heat from both sides of the product during the application of pressure, and such heating is preferred.

### (Die used for baking step)

By using a metal plate having a pattern having protrusions or grooves on the surface in the baking step, a baked cake having a reversed pattern of the pattern of the metal plate can be produced. The baked cake having the pattern can give a complex crunchy texture because of the difference in thickness between the patterned portion and the other portion. In particular, the pattern is of lattices or figures formed by linear protrusions or grooves can add a crunchy texture that is delicately different due to the linear pattern having slightly varying thickness to the texture resulting from a thin sheet-shaped portion. Two metal plates may be used. If either one is a patterned metal plate, a baked cake having the pattern on one side is obtained. If both plates are patterned, a baked cake having the patterns on both sides is obtained. The patterns of the two metal plates may be the same or different. When the same patterns are employed, the directions of the patterns on the front and back surfaces are preferably opposite to each other to give a non-monotonic texture. A depth of the groove or a height of the protrusion of a die is preferably 4 mm or less.

When the oil and fat content of the mixture or the kneaded mixture is low, the baked cake may adhere to the grooves or the protrusions of the metal plate to make it difficult to release the baked cake from the metal plate. Thus, the side surface of the groove is preferably sloped such that the width of the groove of the die becomes narrower towards the bottom, or the side surface of the protrusion is preferably sloped such that the width of the protrusion of the die becomes narrower towards the top. In such a die, the baked cake has a pattern having tapering protrusions or V-shaped grooves. The tilt angle of the groove or the protrusion is preferably about 7 to 15 degrees relative to a line perpendicular to the surface of the metal plate, which varies depending on the nature of the mixture or the kneaded mixture and the property of the die. Since the pattern on the baked cake is the reversed pattern of that formed on the metal plate, the tilt angle of the protrusion or groove formed on the baked cake is approximately equal to the tilt angle of the groove or protrusion formed on the metal plate. Therefore, it is possible to obtain a baked cake having a pattern of the protrusions or grooves having a tilt angle of about 7 to 15 degrees. The present inventors initially predicted that a smaller tilt angle closing to a perpendicular direction allows the pattern of the baked cake to more firmly fit to the grooves or the protrusions of the die, which will lead to a difficulty in release of the baked cake. However, in fact, the present inventors have found by experiments that a larger tilt angle reduces the mold release property and that a smaller tilt angle (closing to the perpendicular direction) preferably enhances the mold release property.

When such an angle range is employed, even if the oil and fat content is low, the baked cake is easily released from the die, and the risk of impairing the shape of the baked cake is low. Also, the pattern on the surface of the baked cake appears beautifully. In this regard, however, as described in Examples below, when the dough itself containing a sufficient amount of oil and fat, as in the case of using butter as a raw material is baked into a cake, the tilt angle may be larger than 7 to 15 degrees.

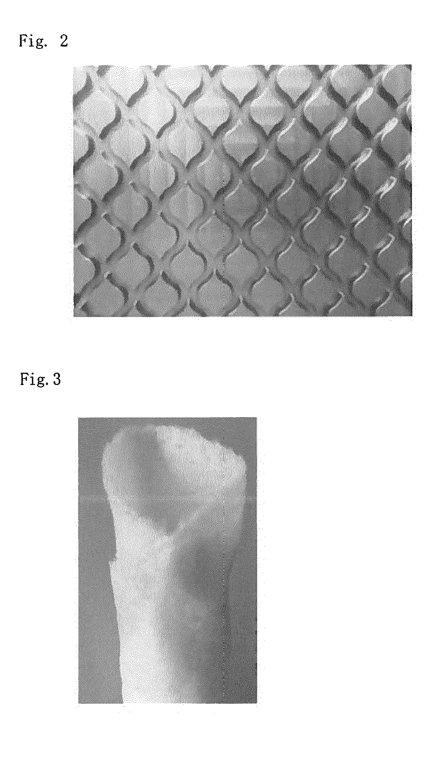

The pattern of the grooves or protrusions on the die is preferably formed in such a manner that the pattern on the thick part of the baked lotus root cake (i.e., the region other than the grooves or protrusions on the die) is seamless (continuous) as much as possible (e.g., seamless wave-shaped grooves in FIG. 2). Since the kneaded mixture has a high viscosity, when the groove on the die is not seamless or has a region where the groove is discontinued by a protrusion, even if the kneaded mixture is sandwiched between two dies and the pressure is applied thereto, the kneaded mixture does not enter a part of the groove on the die or the discontinued region to cause not only incomplete formation of the pattern on the baked cake but also a deformed shape and uneven baking due to the part of the dough not in contact with the die. In this regard, if the die has a pattern in such a manner that the thick part of the baked lotus root cake has a seamless shape, when a pressure is applied to the kneaded mixture sandwiched between two dies, the kneaded mixture evenly spreads along the pattern on the die with making no space to form a baked cake shaped according to the pattern on the die.

The pattern on the die is, however, not limited to the seamless shape, and a portion where the pattern is partly discontinued may be provided. In addition, the depth of the groove or the height of the protrusion is not necessarily constant. For example, the groove may be provided such that the depth decreases from the central part towards the marginal part. The groove or the protrusion that forms the pattern may be provided in any manner as long as the kneaded mixture can evenly and thinly spread when the heat and the pressure are applied to the kneaded mixture. This can constitute not only a simple pattern but also a complex pattern with a high designable property.

A flat plate with no pattern may be used as the metal plate used in the baking step. A die with a pattern may be used as one metal plate, and a flat plate with no pattern may be used as the other opposed metal plate. In this case, the baked cake has the pattern on one side alone. Further, not only the flat plate but also a die having a vessel-like shape can be used as the metal plate, and baked lotus root cakes in various shapes, such as coats of bean-jam-filled wafers, cup shapes, and circular cone-like cones, can also be manufactured. The surface of the metal plate is preferably processed with a fluorine resin for enhancing a mold releasing property.

### (Molding step)

A cake baked after the kneading step may be released from the metal plates and cooled directly or may be molded during a soft state. In the molding step, the baked cake may be die-cut into a predetermined shape immediately (e.g., within 10 seconds after baking) and be molded into a thin sheet-shaped baked cake having a desired shape (e.g., a circular, ellipsoidal, rectangular, or moon-like shape). Alternatively, the sheet-shaped baked cake may be fitted in a die having a vessel-like shape to mold the sheet-shaped baked cake into a desired steric shape (coat of bean-jam-filled wafer, cup shape, or cone shape). The thin sheet-shaped baked cake can be rolled before hardening to be formed into a cigar-shaped baked cake (see FIG. 3).

A baked cake may be eaten directly. Alternatively, two baked lotus root cakes may be eaten having a kneaded mixture before subjected to the baking step as a paste therebetween or a bean paste of adzuki beans or a custard cream therebetween. A cup-shaped or a cone-shaped baked cake molded firmly may be eaten with ice cream placed therein. This baked cake is porous, but hardly absorbs moisture even if being contacted with the air and can keep the crisp texture for several days even if it is not packaged individually, which varies depending on the percentage of raw materials, the extent of baking, and the storage conditions. The present invention will now be described with reference to Examples, but the present invention is not limited thereto.

### (Example 1)

In this Example, a baked lotus root cake was made using raw materials: a lotus root powder, a liquid containing milk, a sweetener, and ground green tea serving as a food material for seasoning. Eggs, wheat flour, and butter, which are frequently used in ordinary baked cakes, were not used. The liquid containing milk used was any of the following three types: a cow milk containing 3.5% fat (specific gravity: 1.03, water content: 87.4% by weight), an aqueous solution of 13% defatted milk, and a yogurt solution (milk fat of plain sugarless type fermented milk: 3.0%, fat-free milk solid: 13.0%, specific gravity: about 1.03, water content: 83.5% by weight). The amounts of the raw materials were as follows: in the case of using 100 cc of the cow milk containing 3.5% fat, 33 g of the lotus root powder, 20 g of Wasanbon (refined sugar made from sugarcane in Japan), and an appropriate amount of the ground green tea (powder or paste obtained by kneading the powder); in the case of using 100 cc of the aqueous solution of 13% defatted milk, 33 g of the lotus root powder, 20 g of Wasanbon, and an appropriate amount of the ground green tea; and in the case of using 300 cc of the yogurt solution, 100 g of the lotus root powder, 50 g of castor sugar, and an appropriate amount of the ground green tea. The yogurt solution was prepared by heating and solubilizing commercially available yogurt. The yogurt solution may be conditioned with water or another liquid if necessary or may be an aqueous solution prepared by dissolving a yogurt power in an appropriate amount of water instead of the yogurt solution.

In the case of using the cow milk as the liquid containing milk, the percentage of the lotus root powder was about 48% by weight of the dry weight of the mixture (33 g of lotus root powder, 20 g of Wasanbon, about 13 g of milk solid and about 3 g of ground green tea). The mixture of these raw materials was kneaded in a short period of time while being heated at high temperature.

Subsequently, an appropriate amount (about 6 to 9 g) of the kneaded mixture was baked with metal plates having a pattern of grooves shown in FIG. 2 at 160°C for about 2 minutes. The baked cake was die-cut into a circular shape immediately after the completion of the baking to obtain a circular baked lotus root cake having a weight of 3 g, a diameter of 70 mm, and a color like ground green tea.

FIG. 1(A) is a photograph of one surface of the baked lotus root cake produced using the cow milk containing 3.5% fat as the liquid containing milk, and FIG. 1(B) is a photograph of the other surface. A wave-shaped pattern was seamlessly provided without any interruption, and the direction of the pattern on the front-side surface was different from that on the back-side surface. In such a baked lotus root cake, the thickness of the thin, flat, patternless part was about 2 mm. The height of the protrusion was about 1 to 2 mm from the surface of the flat part, and the entire thickness of the part having the protrusions on both sides was about 5 mm. This baked lotus root cake had a complex texture of a crisp texture and a soft and light texture like melting in the mouth, and left a flavor of the ground green tea.

Both the baked lotus root cake produced using the aqueous solution of 13% defatted milk and the baked lotus root cake produced using the yogurt solution had a complex texture of a crisp texture and a soft and light texture like melting in the mouth, and left the flavor of the ground green tea as in the baked lotus root cake produced using the cow milk containing 3.5% fat. A slight acidic taste of the yogurt could be felt from the baked lotus root cake produced using the yogurt solution.

### (Example 2)

In this Example, a baked lotus root cake was made under the same condition as in the case of using the cow milk in Example 1 except that the liquid containing milk was changed to 100 cc of water. The baked lotus root cake in this Example also had a complex texture of a crisp texture and a soft and light texture like melting in the mouth, and left the flavor of the ground green tea. However, the umami was slightly reduced and a bitter taste from the ground green tea was felt compared with the baked lotus root cake in Example 1. The percentage of the lotus root powder used in this Example was about 59% by weight of the dry weight of the mixture (33 g of lotus root powder, 20 g of Wasanbon, and about 3 g of ground green tea).

### (Example 3)

In this Example, a baked lotus root cake was made under the same condition as in the case of using the cow milk in Example 1 except that the liquid containing milk was changed to 100 cc of soymilk (specific gravity: 1.02, water content: 91.8% by weight). The baked lotus root cake in this Example also had a complex texture of a crisp texture and a soft and light texture like melting in the mouth, and left the flavor of the ground green tea. The percentage of the lotus root powder used in this Example was about 52% by weight of the dry weight of the mixture (33 g of lotus root powder, 20 g of Wasanbon, about 8 g of soymilk, and about 3 g of ground green tea).

### (Example 4)

In this Example, no food material for seasoning was used. The raw materials used were 33 g of the lotus root powder, 100 cc of the cow milk containing 3.5% fat, and 20 g of Wasanbon. Each step was basically the same as that in Example 1 except that flat metal plates with no pattern were used. The baked lotus root cake had a smooth surface and could be formed into a cigar-shaped baked cake by rolling it immediately after the release from the metal plates (FIG. 3).

### (Example 5)

In this Example, a solid food was made by baking a mixture composed mainly of the lotus root powder without carrying out the step of kneading a mixture. The raw materials used were 33 g of the lotus root powder, 100 cc of the cow milk containing 3.5% fat, 20 g of Wasanbon, and an appropriate amount of the ground green tea as the food material for seasoning. These materials were thoroughly blended to obtain a mixture. Dough of the mixture was a smooth liquid with a low viscosity.

The mixture in an appropriate amount was baked with metal plates having a pattern of grooves shown in FIG. 2 at 160°C for about 2 minutes. Since the solid food in this Example becomes hard immediately after being baked, it is preferable to rapidly release the solid food from the metal plates. The solid food was approximately circular and had a weight of 6 g, a diameter of 70 mm, and a color like ground green tea. Compared with the cakes of Example 1, although there was no substantial difference in size (rather, slightly reduced due to marginal cracks in this Example), the weight was twice the cake, indicating that a high density of the main raw material. This was assumed as follows: Since the kneading step was not carried out, a sufficient amount of air was not incorporated in the mixture; since the starch component was not gelatinized by heating, the water was not absorbed; and as a result, fine pores that are formed due to escape of air and evaporation of water upon baking were not formed. The solid food in this Example may be eaten directly, but it has a slightly hard and rough texture and less sweetness. It is therefore preferred to make the solid food be easily eaten by being combined with other confectionaries (e.g. ice cream or bean paste)or other cooking (e.g., soup) or by containing a conditioned solution (e.g., consommé soup, Japanese stock, or corn potage) conditioned with salt and umami as auxiliary materials.

Baking of the mixture at low temperature gave a cake having a dampish texture with a slightly half-fresh feeling at the central part, but the central part had a half-baked taste although it was soft. Thus, this was unsuitable for baking a cake.

### (Example 6)

In this Example, a baked lotus root cake was produced as in Example 1 except that butter was used in addition to the cow milk containing 3.5% fat as the liquid containing milk. The butter in a liquid or solid form may be kneaded with the mixture or the kneaded mixture or may previously be melted in the cow milk. The amounts of the raw materials were 300 cc of the cow milk containing 3.5% fat, 115 g of the lotus root powder, 85 g of Wasanbon, 15 g of ground green tea, and 15 g or 65 g of butter.

A kneaded mixture in an appropriate amount (about 6 to 9 g) was baked at temperature of 140°C to 150°C for about 3 minutes using the metal plates having a pattern of grooves shown in FIG. 2. The addition of the butter to the raw materials allowed the kneaded mixture to uniformly spread between the dices and the baked cake (thickness of about 2 mm) to have a circular shape with less deformation. Thus, it was not necessary to arrange the shape of the baked cake by die-cutting into a circular shape just after the completion of baking, resulting in a reduction of waste.

When dough containing the butter in this Example is used, it is also possible to use a metal plate having a discontinuous pattern, a metal plate comprising shallow groves or valleys, or a metal plate having a large tilt angle, instead of the metal plate having a seamless pattern as shown in FIG. 2. The dough becomes smooth by adding the butter to the raw materials. Therefore, even if there is a discontinued region due to discontinuous grooves or protrusions, the smooth dough spreads well without forming a space and enters parts of the grooves and the discontinued region, when the dough containing the butter is placed between the metal plates and is applied with pressure. Further, in the case of the dough containing butter, since the risk of producing a part that is not in contact with the metal plate and thereby causing uneven baking is low, a flat metal plate with no pattern can also be used. Thus, the use of dough containing butter allows free selection of, for example, the pattern on the metal plate used in the baking stepand the design of the baked cake.

When 65 g of butter was used, the surface of a baked cake was slight gloss due to an oil and fat component derived from the butter and leaked from the dough itself, and the texture of the baked cake was slightly hard. When 15 g of butter was used, the texture of the baked cake became slightly softer compared with the case of using 65 g of butter. The oil and fat component composed of a plant fat (e.g., cacao butter, peanut butter, or coconut oil) can also be used in place of or in addition to the butter composed of a milk fat. In such a case, chocolate may be used in place of the ground green tea as the food material for seasoning.

As described above, the baked lotus root cake in this Example contained the butter, and therefore had a richer flavor than the baked cake in Example 1 that had a relatively light taste, and was filling and satisfying. Further, in this Example, due to an action of the oil and fat component contained in the butter, it was not necessary to spray or apply oil on the surface of the die used in the baking step. In addition, since the baked cake is easily released from the die, a die having a thinner pattern can be used. The range of the tilt angle of the groove or the protrusion formed on the die (metal plate) can be set wider.

As described above, according to an embodiment of the present invention, it is possible to provide a new solid food composed mainly of a lotus root (lotus root powder). Since such a solid food is free from at least wheat flour and eggs, it is possible to provide safe and reliable solid foods that are reduced in the allergy problems to many consumers. Further, when the other allergic substances (e.g., milk) are not used, the solid food with extremely little risk of allergy can be provided.

According to an embodiment of the present invention, when a kneaded mixture is baked, the air and the water inside the kneaded mixture can escape out to form fine pores in the baking step, and various textures, from a crisp texture to a soft and sticky texture, can be obtained. A kneaded mixture that can be eaten itself can be produced by kneading the blended materials with heating. In an embodiment of the present invention, a baked cake having a quite light texture like melting in the mouth can be provided by appropriately controlling to the conditions of kneading and baking. In an embodiment of the present invention, a baked lotus root cake having rich flavor can be provided by using butter as a raw material. It has been also described that the lotus root is effective for the immune system (pollen disease), and a baked cake that contributes to the health promotion can be provided. Since the lotus root is the main ingredient, it is possible to provide a safe and reliable solid food that is reduced in allergy problems to more consumers.

## Claims

1. A baked lotus root cake, manufactured by a method comprising:
kneading a mixture composed mainly of a lotus root powder with heating to make a kneaded mixture; and
baking up the kneaded mixture into a thin sheet-shaped product by giving heat and pressure thereto.

2. The baked lotus root cake according to claim 1, wherein the kneaded mixture is gelatinized starch component of the lotus root powder.

3. The baked lotus root cake according to claim 1 or 2, wherein the mixture is of a main raw material containing the lotus root powder and an auxiliary raw material containing at least a liquid.

4. The baked lotus root cake according to claim 3, wherein the mixture includes 20 g to 40 g of the lotus root powder, 10 g to 30 g of a sweetener, and 100 cc of the liquid.

5. The baked lotus root cake according to claim 3 or 4, wherein the liquid contains milk.

6. The baked lotus root cake according to claim 5, wherein the milk contains butter.

7. The baked lotus root cake according to any one of claims 1 to 6, wherein the baked lotus root cakes is seasoned with a food material for seasoning.

8. The baked lotus root cake according to any one of claims 1 to 7, wherein the baked lotus root cake has a pattern having an uneven thickness and a continuous thick portion on a surface of the thin sheet-shaped baked cake.

9. The baked lotus root cake according to any one of claims 1 to 8, wherein the baked lotus root cake has a pattern comprising protrusions or grooves having a tilt angle of 7 to 15 degrees on at least a part of the surface.

10. A cake composed of two of the baked lotus root cakes according to any one of claims 1 to 9, wherein a pair of the baked lotus root cakes is stacked with a bean paste therebetween.

11. A solid food, manufactured by a method comprising, baking up a mixture composed mainly of a lotus root powder and not containing wheat flour and eggs by giving heat and pressure thereto.

12. A solid food, manufactured by a method comprising:
kneading a mixture composed mainly of a lotus root powder and not containing wheat flour and eggs with heating to make a kneaded mixture; and
baking up the kneaded mixture into a baked product by giving heat and pressure thereto.

13. The solid food according to claim 11 or 12, wherein the mixture is of a main raw material containing the lotus root powder and an auxiliary raw material containing at least the liquid.

14. The solid food according to claim 13, wherein the mixture is composed of 20 g to 40 g of the lotus root powder, 10 g to 30 g of the sweetener, and 100 cc of the liquid.

15. The solid food according to claim 13 or 14, wherein the liquid contains milk.

16. The solid food according to claim 15, wherein the milk contains butter.

17. The solid food according to any one of claims 11 to 16, wherein the solid food is seasoned with a food material for seasoning.

18. The solid food according to any one of claims 11 to 17, wherein the solid food has a pattern having an uneven thickness and a continuous thick portion on a surface of the thin sheet-shaped solid food.

19. The solid food according to any one of claims 11 to 18, wherein the solid food has a pattern comprising protrusions or grooves having a tilt angle of 7 to 15 degrees on at least a part of the surface.

20. A food composed of two of the solid food according to any one of claims 11 to 19, wherein a pair of the solid food is stacked with a bean paste therebetween.

21. A method for manufacturing a baked lotus root cake wherein the method comprising:
mixing a main raw material containing a lotus root powder and an auxiliary raw material containing at least a liquid;
kneading the mixture with heating to gelatinize a starch component of the lotus root powder; and
baking up the kneaded mixture by giving heat and pressure thereto into a thin sheet-shaped product.

22. The method for manufacturing the baked lotus root cake according to claim 21, wherein the amount of the lotus root powder contained in the raw material is 50% by weight or more based on the amount of the raw material or 25% by weight or more based on the dry weight of the kneaded mixture.

23. The method for manufacturing the baked lotus root cake according to claim 22, the method comprising, mixing 20 g to 40 g of the lotus root powder and 10 g to 30 g of the sweetener with 100 cc of the liquid.

24. The method for manufacturing the baked lotus root cake according to claim 21 or 22, the method comprising, baking up the kneaded mixture into the thin sheet-shaped product by giving heat at 130°C to 175°C.

25. The method for manufacturing the baked lotus root cake according to claim 24, the method comprising, baking up the kneaded mixture into the thin sheet-shaped product by giving heat at 150°C to 165°C.

26. The method for manufacturing the baked lotus root cake according to any one of claims 21 to 25, wherein the liquid contains milk.

27. The method for manufacturing the baked lotus root cake according to claim 26, wherein the milk contains butter.

28. The method for manufacturing the baked lotus root cake according to any one of claims 21 to 27, wherein a taste and a smell of a food material for seasoning is transferred to the liquid while the liquid being warmed.

29. The method for manufacturing the baked lotus root cake according to any one of claims 21 to 27, the method comprising, kneading a food material for seasoning with the kneaded mixture.

30. The method for manufacturing the baked lotus root cake according to any one of claims 21 to 29, the method comprising, molding the thin sheet-shaped product within 10 seconds after being baked with heat and pressure.

31. A method for manufacturing a solid food wherein the method comprising:
mixing a raw material containing a lotus root powder and not containing wheat flour and eggs and an auxiliary raw material containing at least a liquid; and
baking up the mixture by applying heat thereto.

32. A method for manufacturing a solid food wherein the method comprising:
mixing a raw material containing a lotus root powder and not containing wheat flour and eggs and an auxiliary raw material containing at least a liquid,
kneading the mixture with heating; and
baking up the kneaded mixture by applying heat and pressure thereto.

33. The method for manufacturing the solid food according to claim 31 to 32, wherein the amount of the lotus root powder contained in the raw material is 50% by weight or more based on the amount of the raw material or 25% by weight or more based on the dry weight of the kneaded mixture.

34. The method for manufacturing the solid food according to claim 33, the method comprising, mixing 20 g to 40 g of the lotus root powder and 10 g to 30 g of the sweetener with 100 cc of the liquid.

35. The method for manufacturing the solid food according to any one of claims 31 to 34, the method comprising, baking up the mixture or the kneaded mixture into the thin sheet-shaped product by giving heat at 130°C to 175°C.

36. The method for manufacturing the solid food according to claims 35, the method comprising, baking up the mixture or the kneaded mixture into the thin sheet-shaped product by giving heat at 150°C to 165°C.

37. The method for manufacturing the solid food according to any one of claims 31 to 36, wherein the liquid contains milk.

38. The method for manufacturing the solid food according to claim 37, wherein the milk contains butter.

39. The method for manufacturing the solid food according to any one of claims 31 to 38, wherein a taste and a smell of a food material for seasoning is transferred to the liquid while the liquid being warmed.

40. The method for manufacturing the solid food according to any one of claims 31 to 38, the method comprising, applying a food material for seasoning with the mixture or the kneaded mixture.

41. The method for manufacturing the solid food according to any one of claims 31 to 40, wherein the thin sheet-shaped product is die-cut within 10 seconds after baking with heat and pressure.
